# EUROPEAN PATENT SPECIFICATION

(11) **EP 3 453 895 B1**
(45) Date of publication and mention of the grant of the patent: **02.08.2023**
(21) Application number: 17190597.9
(22) Date of filing: 12.09.2017
(51) Int. Cl.: G01M 7/08, F03G 1/02

(54) **ACTUATOR DEVICE, ARRANGEMENT AND METHOD**
AKTUATORVORRICHTUNG, ANORDNUNG UND VERFAHREN
DISPOSITIF, AGENCEMENT ET PROCÉDÉ D'ACTIONNEUR

(43) Date of publication of application: 13.03.2019
(73) Proprietor: Robert Bosch GmbH, 70442 Stuttgart (DE); The European Union, represented by the European Commission, 1049 Brussels (BE)
(72) Inventor: MAGONETTE, Georges, 21023 Besozzo (IT); VIACCOZ, Bernard, 21023 Besozzo (IT); PALOPOLI, Andrea Maria, 20131 Milano (IT); FAZZARI, Bruno, 28100 Novara (IT)
(74) Representative: Winter, Brandl - Partnerschaft mbB

(56) References cited:
- EP-A1- 2 746 591
- CN-A- 104 458 185
- CN-U- 204 008 056
- CN-U- 204 575 289
- US-A1- 2015 300 933
- US-B2- 7 591 168

## Description

### Field of the invention

The invention relates to an actuator device for a blast simulator to emulate explosive events in a laboratory. The invention further relates to an arrangement comprising a plurality of actuator devices and a method for an actuator device or plural actuator devices.

### Background of the invention

In order to safely configure critical infrastructure, for example in the field of energy, health, communications, government and transportation, against explosions, especially by reason of terrorist attacks, it is necessary to appropriately design the infrastructure. For this purpose, examinations in the form of tests are carried out. Such tests may be carried out, for example, with the aid of computer simulation, wherein the test results obtained can be validated in laboratory. A blast simulator by which an explosion can be simulated may be used for validation. The use of a real explosion for validation instead of the blast simulator would entail high costs and is hardly repeatable. Moreover, in the case of real explosion it is detrimental during a test that due to the fireball visual observation and video recording of a process of change or failure is not possible so that reliable real-time field data are difficult to establish. Thus, in the case of real explosion usually only the final result after explosion can be detected. In order to overcome said drawbacks blast simulators are provided.

During explosion, within extremely short time, for example within several milliseconds, a high blasting shock occurs which results in damage of the infrastructure. For this purpose, numeric simulation can be carried out and validation can be performed by experimental tests, as already mentioned in the foregoing. Accordingly, a blast simulator enables repeatable controlled blast load simulations to be carried out on full-scale structural elements such as walls and columns, for example.

In the document US 2008/0190286 A1 a blast simulator having a differential cylinder is shown. On a piston rod of a piston of the differential cylinder an impact mass which is accelerated via the cylinder toward a structure to be examined is arranged. For accelerating the piston, pressure medium provided in plural pressure medium reservoirs is applied to the piston by valve control. Further, in the mentioned document an arrangement of a plurality of such actuators is disclosed which are jointly controlled by a controller. A drawback of this solution is the configuration of the actuators which in terms of devices is complex and cost-intensive. Moreover, it has been shown in practice that for a plurality of actuators a sufficiently accurate synchronous activation of the actuators via the valve control and, resp., synchronous acceleration of the impact masses is not possible.

Document US 7 591 168 B2 relates to a test equipment system and method for testing a component of an article wherein the system comprises a force element arranged to move from a first position to a second position, a striker element connected to the force element arranged at one end of the force element, a frame structure arranged to guide and support the force element between the two positions, the second end of the force element being connected to the frame structure, wherein the force element in the first position is in an energised state and the force element in the second position is arranged to impact the striker element against the component.

### Disclosure of the invention

In contrast to this, the object underlying the invention is to provide an actuator device, an arrangement comprising a plurality of actuator devices and a method for eliminating the afore-mentioned drawbacks.

The object as regards the actuator device, the arrangement and the method is achieved by the present invention according to the features of claims 1, 10 and 12, respectively.

Advantageous developments of the invention constitute the subject matter of the subclaims.

In accordance with the invention, an actuator device for a blast simulator comprising a
first actuator or linear actuator is provided. The latter includes a linearly movable piston which can be connected, especially via a piston rod, to an impact mass. The latter is accelerated via the piston toward a structure or test structure, especially in the horizontal direction. A biasing force or actor force can advantageously be applied to the piston via a biasing means in the direction of the structure. Moreover, a second actuator is provided. The piston is displaceable by the same opposite to the biasing force so as to tension the biasing means, especially to increase the biasing force. It is further imaginable to maintain the piston in an initial position via the second actuator. In a simple manner in terms of devices, the second actuator and the piston are connected by a mechanical connecting element. The latter is arranged or formed so that the connection between the second actuator and the piston can be released in a controlled manner. After release the piston is adapted to be accelerated along with the impact mass via the biasing force toward the structure, wherein after a defined displacement path, the velocity of the piston (8) is decelerated, with the impact mass then detaching from the first piston (8).

This solution offers the advantage that in a technically simple way a blast simulator is realized. In contrast to prior art, triggering or start of acceleration of the impact mass is not initiated by valve control but by mechanically releasing the connection via the connecting element. In this way, an initial time at which an acceleration of the piston and, resp., of the impact mass starts can be observed and reproduced extremely exactly. The actuator device leads to better reproduction of a pressure wave curve and a test of improved quality.

In a further configuration of the invention, the element of the invention is a retaining bolt in a technically simple manner. Moreover, it is imaginable to provide an explosive charge at the connecting element. This offers the advantage that an initiation of the acceleration of the piston can be started by explosion of the explosive charge. Since such explosion is extremely quickly initiated, the piston can be accelerated practically immediately after initiating the explosion and there will be no decelerations as, e.g., in the case of the hydraulic control in the state of the art described in the beginning. Thus, by the actuator device blast-like loads can be applied to structural specimen, components and materials by simple devices. A well-controlled blast-like impulse then can be applied to the structural specimens via the impact mass. Thus, the explosive charge can be arranged and configured so that the connecting element is destroyed or ruptured or broken during explosion of the explosive charge so as to disconnect the connection between the second actuator and piston. In a low-cost manner, the connecting element may be formed, for example, of steel, especially of high-strength steel. In a technically simple manner a recess is formed in the retaining bolt. The explosive charge then can be introduced into the recess. In this way, forces acting especially in the axial direction which may result in a break of the retaining bolt can be easily applied to the retaining bolt during explosion of the explosive charge. The recess is introduced as an, especially radial, drilling hole in a technically simple and low-cost manner.

In another configuration of the invention, a controllable signal transmitter or a control device may be provided. An, especially electric, signal resulting in an explosion or a triggering of the explosive charge can be output by said signal transmitter/control device. In other words, a detonator may be provided to trigger an explosion of the explosive charge, wherein the detonator may be controlled by an electric signal. Hence, for starting a test with the actuator device the bolt can break by explosion of the explosive charge within extremely short time. This may occur within microseconds after triggering the explosive charge via the electric signal.

The first actuator is preferably designed simply as a cylinder or pneumatic cylinder. It may include a cylinder housing in which the piston is movably guided. For example, the cylinder is a synchronous cylinder or at least a cylinder having two piston rods. In the cylinder, a first piston rod may be provided which extends starting from the piston toward the test structure and/or away from the second actuator and/or in the direction of acceleration (after explosion) of the impact mass. Moreover, a second piston rod may be provided which extends starting from the piston toward the second actuator and/or away from the structure and/or against the direction of acceleration of the impact mass (after explosion). Preferably, the piston rods protrude from the cylinder housing. The impact mass may be arranged on the first piston rod. The second piston rod is preferably connected to the second actuator via the connecting element in a technically simple manner. The piston preferably separates a first, especially hollow-cylindrical, cylinder chamber from a second, especially hollow-cylindrical cylinder chamber.

In a further configuration of the invention, the biasing means may be easily configured by a spring element which is tensioned upon displacement of the piston in a direction away from the structure or test structure. The spring element may especially be provided to be arranged in the first cylinder chamber in a compact and safe manner. It may rest on the cylinder housing and apply the biasing force to the piston. As a spring element in particular a Belleville spring or disk spring is provided or plural Belleville springs or disk springs arranged in series are provided. The spring(s) preferably encompass(es) the first piston rod.

It may be provided as an alternative or in addition that the biasing means is formed by a fluid, especially gas, provided in the first cylinder chamber. Said fluid may be applied to the piston in the direction of the test structure and, resp., in the direction of acceleration of the impact mass. For example, nitrogen is provided as a gas. In a further configuration of the invention, a fluid reservoir may be connected, especially via a valve, to the first cylinder chamber for controlling the fluid quantity in the first cylinder chamber of the cylinder housing. By adjusting the fluid quantity in the first cylinder chamber also a pressure acting on the piston can thus be adjusted for forming the biasing force. The second cylinder chamber is designed to be open toward the ambience via a throttle, for example. Hence, upon displacement of the piston in the direction of a reduction of the second cylinder chamber, pressure medium may escape therefrom in a restricted manner, wherein the piston can be decelerated in a technically simple manner especially from a particular displacement path of the piston. The throttle is formed, for example, by at least one opening or at least one passage recess being introduced to the cylinder housing, especially on the front face.

In order to reduce the mechanical loads acting on the cylinder during use of the actuator, it may be provided to support the cylinder housing in an axially displaceable manner in a retaining structure. Preferably, the cylinder housing is supported to be axially displaceable in a plain bearing or ball bearing. The cylinder housing is encompassed, for example, by the plain bearing or ball bearing, wherein the plain bearing or ball bearing then may be fixed in the retaining structure. The cylinder housing may preferably take a circular-cylindrical shape. For delimiting a displacement path of the cylinder housing, a damper device is preferably provided by means of which the cylinder housing may rest on the retaining structure in the axial direction and/or circumferential direction. The damper device may dampen at least a movement of the cylinder housing toward the test structure or in the direction of acceleration of the impact mass. The damper device includes, for example, a technically simple damper which is adapted to rest, on the one hand, on a radial projection of the cylinder housing and, on the other hand, on the retaining structure. Preferably, several or plural dampers are provided which are arranged circularly or on a pitch circle or in any other pattern around the cylinder housing.

In a further configuration of the invention, a stop may be provided on the cylinder housing. A displacement path of the cylinder housing may then be restricted by means of said stop in the direction away from the test structure or against the direction of acceleration of the impact mass. The stop may abut against the retaining structure and then may rest on the same so as to prevent further displacement of the cylinder housing in the axial direction. The retaining structure is thus arranged between the dampers and the stop, for example. The stop is in the form of a ring element or radial collar or locking ring, for example, that encompasses the cylinder housing and is adapted to be tightly connected to the latter. Thus, the stop is arranged to restrict a return movement of the first actuator in a technically simple manner.

In another configuration of the invention, the second actuator may be provided to be designed as a technically simple cylinder or hydraulic cylinder. In this way, in a technically simple and compact manner high forces can be applied for displacing the piston and for increasing the biasing force. The hydraulic cylinder is in the form of a differential cylinder, for example. A piston rod may extend away from a piston guided in the cylinder. Said piston rod is then preferably connected to the second piston rod of the first actuator via the connecting element. The piston rods of the actuators are preferably coaxially arranged, which allows for axial force transmission without any leverage. Of preference, the connecting element is arranged between the piston rods. Thus, the connecting element may be arranged, for example, between end faces of the piston rods. It is also imaginable to provide the connecting element coaxially or at a parallel distance from the piston rods.

The impact mass is connected to the actuator such that it can detach from the actuator in the direction of acceleration toward the test structure. In the opposite direction, it is possible that the impact mass rests on the actuator. The test structure is preferably arranged, when viewed in the direction of acceleration, ahead of the impact mass. The impact mass is, for example, a pad, especially a polyurethane pad. Of preference, a size and/or a weight of the impact mass can be adjusted.

In accordance with the invention, an arrangement or a blast simulator comprising a plurality of actuator device according to one or more of the preceding aspects is provided. This solution offers the advantage that synchronization of the movements of the actuator devices is improved, as there is no hydraulic triggering but a mechanical triggering. When an explosive charge is used for the actuator devices, a simultaneous triggering of the actuator devices may take place within few microseconds. Triggering of the actuator devices is preferably performed in a synchronized, especially simultaneous manner.

In the method according to the invention comprising an actuator device according to one or more of the preceding aspects or comprising an arrangement according to one or more of the preceding aspects, the following steps are provided:
- Tensioning the biasing means by displacing the piston in a direction away from the direction of acceleration of the impact mass provided after triggering by the second actuator,
- retaining the piston in an initial position, wherein especially the stop of the first actuator is adjacent to the retaining structure,
- releasing the connection between the second actuator and the piston.

When a spring element or spring elements is/are provided as biasing means, it/they can be designed so that the piston, after disconnecting the second actuator from the piston, can move at a maximum velocity of about 10 m/s. The gas provided in the first cylinder chamber may help to further increase said velocity. The biasing force to be applied via the gas can be adjusted by the gas quantity in the first cylinder chamber so that the biasing force acting on the piston can be adapted where needed.

After the piston has been accelerated along with the impact mass by the biasing force, the piston may be decelerated after a predetermined piston stroke, especially by restrictedly discharging fluid in the second cylinder chamber to the ambience, and in so doing may rest on the remaining first actuator. The latter in turn may rest on the retaining device via the damper device. When the piston is decelerated, the impact mass is released and subsequently collides with the test structure, thus causing local pressure to be reproduced and simulated similarly to that of a blast wave.

### Brief description of the drawings

Preferred embodiments of the invention shall be illustrated in detail hereinafter by way of schematic drawings, wherein:
Figure 1 shows a side view of an actuator device according to an embodiment in an initial position,
Figure 2 shows the actuator device of Figure 1 in a starting position,
Figure 3 shows the actuator device of Figure 1 in an end position,
Figure 4 schematically shows an arrangement comprising a plurality of actuator devices according to the embodiment and
Figure 5 in a diagram shows a pressure curve during an explosion.

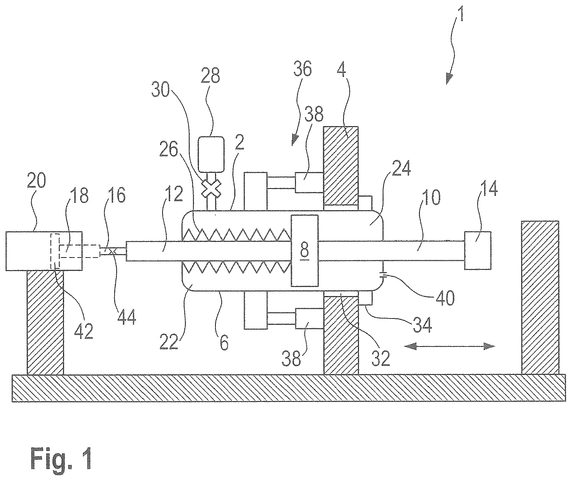

According to Figure 1, an actuator device 1 is provided. It includes a first actuator 2 in form of a differential cylinder. The latter is supported to be axially displaceable with respect to its longitudinal direction in a retaining structure 4. The first actuator 2 has a cylinder housing 2 in which a piston 8 is movably guided. Starting from the piston 8 a first piston rod 10 extends to the one side and a second piston rod 12 extends to the other side. At the end side of the first piston rod 10 an impact mass 14 is supported. At the end side of the second piston rod 12 a connecting element in the form of a retaining bolt 16 is fixed. The latter is further connected to a piston rod 18 of a second actuator 20. The piston 8 of the first actuator 2 separates a first cylinder chamber 22 from a second cylinder chamber 24 in the cylinder housing 6. When displacing the piston 8 in the extending direction of the first piston rod 10, the first cylinder chamber 22 is enlarged. In the first cylinder chamber 22 a spring arrangement 26 is provided comprising a plurality of spring elements which are in the form of Belleville springs. The spring array 26 forms part of a biasing means. A biasing force is applied to the piston 8 by said biasing means in the extending direction of the first piston rod 10. When the piston 8 is displaced by the second actuator 20 in the retracting direction of the piston rod 10, the biasing force of the spring arrangement 26 is increased.

Further, the first cylinder chamber 22 is fluid-communicated with a fluid reservoir 28 which is connected to the first cylinder chamber 22 via a valve 30. The fluid reservoir 28 and the first cylinder chamber 22 are filled with fluid in the form of gas, especially nitrogen. The fluid quantity in the first cylinder chamber 22 can be adjusted via the fluid reservoir 28 and the valve 30. If, for example, the valve 30 is opened, upon displacement of the piston 8 in the direction of a reduction of the first cylinder chamber 22 fluid can be displaced from the latter into the fluid reservoir 28. When the valve 30 is opened and the piston 8 is displaced in the direction of an increase in the first cylinder chamber 22, again fluid can be supplied from the fluid reservoir 28 into the first cylinder chamber 22. If the valve 30 is closed, in the first cylinder chamber 22 a fixed fluid quantity is provided. The fluid is pressurized on the piston 8 and then equally transmits biasing force to the same, if the pressure is higher in the first cylinder chamber 22 than in the second cylinder chamber 24. Upon displacement of the piston 8 in the direction of reduction of the first cylinder chamber 22, the biasing force applied to the piston 8 via the fluid will increase.

The cylinder housing 6 is encompassed by a plain bearing 32 which is fixed in the retaining structure 4. When viewed in the axial direction, on a first side of the plain bearing 32 the cylinder housing 6 includes a radially protruding stop 34. The latter is adjacent to the retaining structure 4 in the position of the cylinder housing 6 shown in Figure 1 and thus delimits a displacement path of the cylinder housing 6 toward the second actuator 20. On the other side of the plain bearing 32, when viewed in the axial direction, a damper device 36 is provided. It includes a plurality of dampers 38 which, when viewed in the axial direction, on the one hand rest on the cylinder housing 6 and, on the other hand, on the retaining structure 4 and dampen an axial movement of the cylinder housing 6. The second cylinder chamber 24 is opened to the outside via a throttle 40.

The second actuator 20 provided for displacing the piston 8 against the biasing force is in the form of a hydraulic cylinder. The piston rod 18 is connected to a piston 42 to which pressure medium can be applied in a direction opposite to the biasing force in a manner which is not shown here. The second actuator 20 includes a comparatively small constructed space due to its hydraulic configuration and is nevertheless adapted to apply high forces for displacing the piston 8.

The retaining bolt 16 includes an explosive charge 44. If the latter is ignited, this results in a break of the retaining bolt 16 and thus in a separation of the piston rod 18 of the second actuator 20 from the piston rod 12 of the first actuator 2.

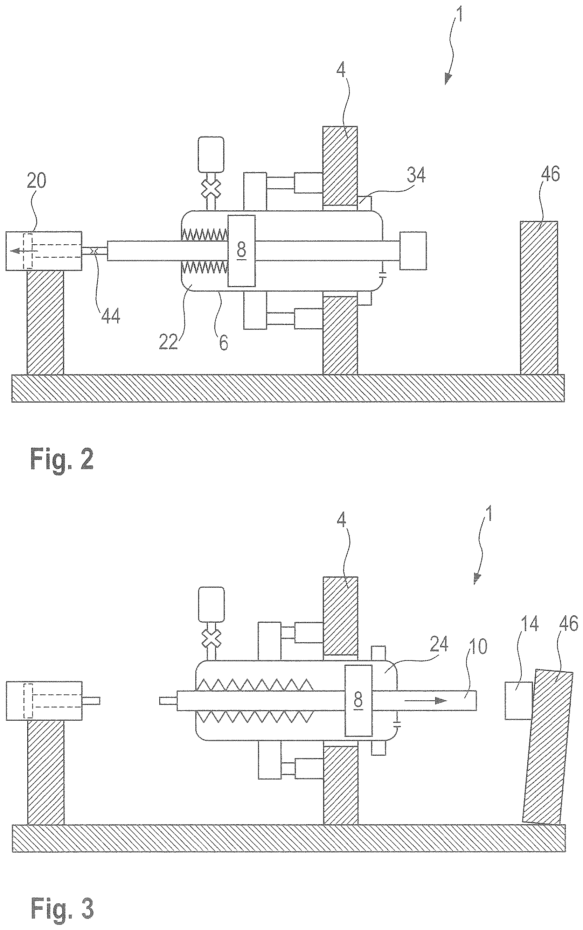

In accordance with Figure 2, a starting position of the actuator device 1 is shown. The piston 8 in this case is displaced in the direction of reduction of the first cylinder chamber 22 via the second actuator 20. Thus, a biasing force is applied to the piston 8 via the tensioned spring arrangement 26 and via the fluid present in the first cylinder chamber 22. Moreover, the stop 34 of the cylinder housing 6 is adjacent to the retaining structure 4. In order to simulate an explosion in a test structure 46, the actuator device 1 is triggered. For this purpose, the explosive charge 44 is made to explode. According to Figure 3, the piston 8 is initially accelerated via the biasing force in the direction of reduction of the second cylinder chamber 24, which equally accelerates the impact mass 14. After a defined displacement path, the velocity of the piston 8 is decelerated, with the impact mass 14 then detaching from the first piston rod and striking the test structure 46.

Following the triggering of the actuator devices 1, the broken connecting element 16 can be easily replaced and thus the actuators 2 and 20 then can be connected to each other again. After placing an impact mass onto the first piston rod 10, the actuator device 1 is ready for use again.

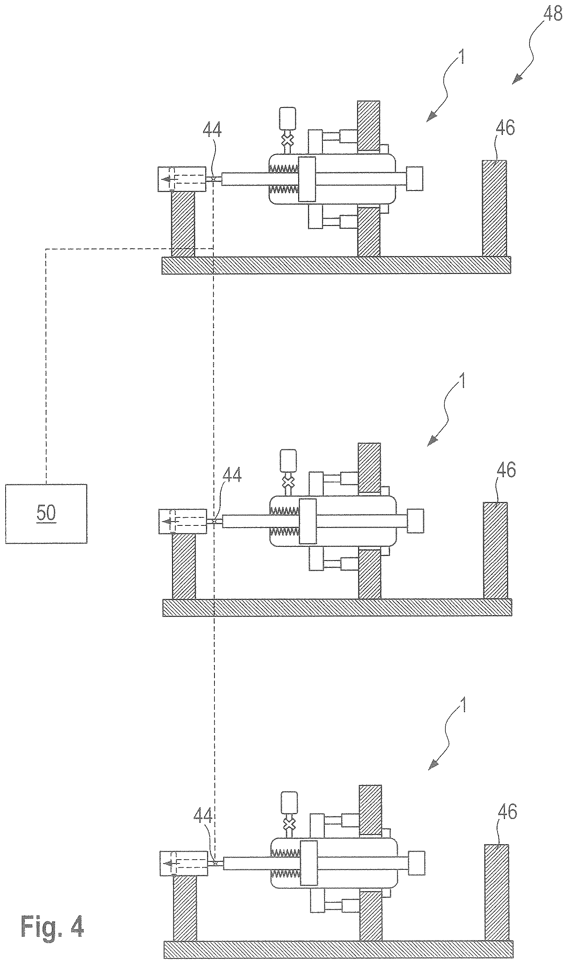

According to Figure 4, an arrangement 48 including three actuator devices 1 is shown. This arrangement may be provided for applying a joint test structure 46, for example. The explosive charges 44 of the actuator devices 1 can be jointly triggered via a detonator 50. Hence, in contrast to the state of the art, virtually simultaneous triggering of the actuator devices 1 takes place, which extremely precisely simulates a blast wave.

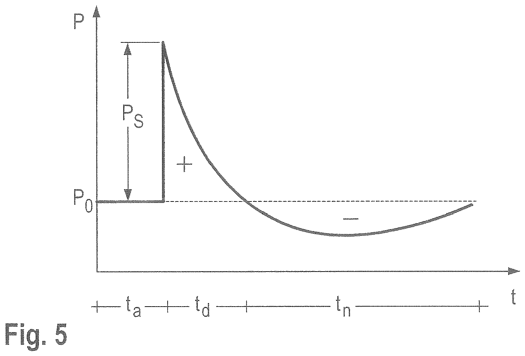

In accordance with Figure 5, a pressure wave curve is shown as background information. A pressure p is plotted on an ordinate and a time t is plotted on an abscissa. According to Figure 5, an ambient pressure p₀ is inserted. A typical pressure wave includes a maximum overpressure pₛ which decreases over time. From the duration t_{d} until the pressure pₛ decreases to the ambient pressure p₀, the impulse of the pressure wave is resulting. When said pressure wave collides with a test structure, then the impulse which takes few milliseconds will result in application of high forces. The pressure wave shown in Figure 5 can be simulated extremely precisely by the actuator device 1 according to the invention or by the arrangement 48.

The invention discloses an actuator device for a blast simulator comprising a first actuator which serves for accelerating an impact mass, and comprising a second actuator by which the first actuator is biased. The two actuators are mechanically connected to each other and are also mechanically separated from each other so as to trigger the first actuator and to accelerate the impact mass.

## Claims

1. An actuator device for a blast simulator, comprising a first actuator (2) including a linearly movable piston (8), an impact mass (14) adapted to be accelerated via the piston (8) in a direction away from the first actuator (2), wherein a biasing force can be applied to the piston (8) in the direction of acceleration of the impact mass (14) via a biasing means (22, 26), and wherein a second actuator (20) is provided by which the piston (8) is displaceable opposite to the biasing force so as to tension the biasing means (22, 26), with the second actuator (20) and the piston (8) being connected via a mechanical connecting element (16) which is arranged for releasing the connection between the second actuator (20) and the piston (8) in a controlled manner, **characterised in that** :
the impact mass (14) is connected to the first actuator (2) such that it can detach from the first actuator (2) in the direction of acceleration, wherein after a defined displacement path, the velocity of the piston (8) is decelerated, with the impact mass then detaching from the piston (8).

2. The actuator device according to claim 1, wherein the connecting element is in the form of a retaining bolt (16).

3. The actuator device according to claim 1 or 2, wherein the connecting element (16) includes an explosive charge (44).

4. The actuator device according to claim 3, wherein the explosive charge (44) is arranged and configured so that the connecting element (16) is actuated upon triggering of the explosive charge (44) so as to disconnect the second actuator (20) from the piston (8).

5. The actuator device according to any one of the preceding claims, wherein the first actuator (2) is in the form of a cylinder and includes a cylinder housing (6) in which the piston (8) is movably guided, wherein the piston (8) separates a first cylinder chamber (22) from a second cylinder chamber (24).

6. The actuator device according to claim 5, wherein in the first cylinder chamber (22) a spring element (26) is arranged which forms the biasing means and which rests on the cylinder housing (6) and applies the biasing force to the piston (8) and/or wherein in the first cylinder chamber (22) a fluid is provided which is applied to the piston (8) in the direction of expand of the first cylinder chamber (22), with the fluid forming the biasing means.

7. The actuator device according to any one of the preceding claims, wherein the first actuator (2) is supported to be axially displaceable in a retaining structure (4).

8. The actuator device according to claim 7, wherein a damper device (36) is provided by which the first actuator (2) rests on the retaining structure (4), and/or wherein a stop (34) is provided via which a displacement path of the first actuator (2) is limited in the opposite direction of acceleration of the impact mass (14).

9. The actuator device according to any one of the preceding claims, wherein the second actuator (20) is in the form of a hydraulic cylinder.

10. An arrangement comprising a plurality of actuator devices according to any one of the preceding claims.

11. The arrangement according to claim 10, wherein the actuator devices (1) are adapted to be triggered in a synchronized manner.

12. A method comprising an actuator device according to any one of the claims 1 to 9 or comprising an arrangement according to claim 10 or 11, comprising the steps of:
- tensioning the first actuator (2),
- releasing the connection between the first actuator (2) and the second actuator (20) for accelerating the impact mass (14).

## Patentansprüche

1. Aktorvorrichtung für einen Explosionssimulator mit einem ersten Aktor (2), der einen linear beweglichen Kolben (8) aufweist, einer Aufprallmasse (14), die über den Kolben (8) in eine vom ersten Aktor (2) wegführende Richtung beschleunigt werden kann, wobei auf den Kolben (8) über ein Vorspannmittel (22, 26) eine Vorspannkraft in Richtung der Beschleunigung der Aufprallmasse (14) ausgeübt werden kann, und wobei ein zweiter Aktor (20) vorgesehen ist, durch den der Kolben (8) entgegen der Vorspannkraft verschiebbar ist, um auf diese Weise das Vorspannmittel (22, 26) zu spannen, wobei der zweite Aktor (20) und der Kolben (8) über ein mechanisches Verbindungselement (16) verbunden sind, das zum gesteuerten Lösen der Verbindung zwischen dem zweiten Aktor (20) und dem Kolben (8) angeordnet ist, **dadurch gekennzeichnet, dass**:
die Aufprallmasse (14) mit dem ersten Aktor (2) derart verbunden ist, dass sie sich vom ersten Aktor (2) in Richtung der Beschleunigung lösen kann, wobei nach einem definierten Verschiebeweg die Geschwindigkeit des Kolbens (8) verlangsamt wird, wobei sich die Aufprallmasse dann vom Kolben (8) löst.

2. Aktorvorrichtung nach Anspruch 1, wobei das Verbindungselement als Haltebolzen (16) ausgebildet ist.

3. Aktorvorrichtung nach Anspruch 1 oder 2, wobei das Verbindungselement (16) eine Sprengladung (44) enthält.

4. Aktorvorrichtung nach Anspruch 3, wobei die Sprengladung (44) so angeordnet und ausgestaltet ist, dass das Verbindungselement (16) bei Auslösung der Sprengladung (44) betätigt wird, um auf diese Weise den zweiten Aktor (20) vom Kolben (8) zu trennen.

5. Aktorvorrichtung nach einem der vorhergehenden Ansprüche, wobei der erste Aktor (2) als Zylinder ausgebildet ist und ein Zylindergehäuse (6) aufweist, in dem der Kolben (8) beweglich geführt ist, wobei der Kolben (8) einen ersten Zylinderraum (22) von einem zweiten Zylinderraum (24) abtrennt.

6. Aktorvorrichtung nach Anspruch 5, wobei in der ersten Zylinderkammer (22) ein Federelement (26) angeordnet ist, welches das Vorspannmittel bildet und welches sich am Zylindergehäuse (6) abstützt und die Vorspannkraft auf den Kolben (8) ausübt, und/oder wobei in der ersten Zylinderkammer (22) ein Fluid vorgesehen ist, das den Kolben (8) in Ausdehnungsrichtung der ersten Zylinderkammer (22) beaufschlagt, wobei das Fluid das Vorspannmittel bildet.

7. Aktorvorrichtung nach einem der vorhergehenden Ansprüche, wobei der erste Aktor (2) in einer Haltestruktur (4) axial verschiebbar gelagert ist.

8. Aktorvorrichtung nach Anspruch 7, wobei eine Dämpfungseinrichtung (36) vorgesehen ist, mit der sich der erste Aktor (2) an der Haltestruktur (4) abstützt, und/oder wobei ein Anschlag (34) vorgesehen ist, über den ein Verschiebeweg des ersten Aktors (2) entgegen der Richtung der Beschleunigung der Aufprallmasse (14) begrenzt wird.

9. Aktorvorrichtung nach einem der vorhergehenden Ansprüche, wobei der zweite Aktor (20) als Hydraulikzylinder ausgebildet ist.

10. Anordnung mit einer Vielzahl von Aktorvorrichtungen gemäß einem der vorhergehenden Ansprüche.

11. Anordnung nach Anspruch 10, wobei die Aktorvorrichtungen (1) angepasst sind, um synchronisiert ausgelöst zu werden.

12. Verfahren mit einer Aktorvorrichtung gemäß einem der Ansprüche 1 bis 9 oder mit einer Anordnung gemäß Anspruch 10 oder 11, mit den Schritten:
- Spannen des ersten Aktors (2),
- Lösen der Verbindung zwischen dem ersten Aktor (2) und dem zweiten Aktor (20) zur Beschleunigung der Aufprallmasse (14).

## Revendications

1. Dispositif actionneur pour un simulateur d'explosion, comprenant un premier actionneur (2) incluant un piston mobile linéairement (8),
une masse d'impact (14) adaptée pour accélérer via le piston (8) dans une direction contraire au premier actionneur (2),
dans lequel une force de sollicitation peut être appliquée sur le piston (8) dans la direction d'accélération de la masse d'impact (14) via un moyen de sollicitation (22, 26), et dans lequel un second actionneur (20) est fourni grâce auquel le piston (8) est déplaçable à l'opposé de la force de sollicitation de manière à tendre le moyen de sollicitation (22, 26), avec le second actionneur (20) et le piston (8) qui sont reliés via un élément de liaison mécanique (16) qui est agencé pour relâcher la liaison entre le second actionneur (20) et le piston (8) d'une manière commandée, **caractérisé en ce que** :
la masse d'impact (14) est reliée au premier actionneur (2) de telle sorte qu'elle puisse se détacher du premier actionneur (2) dans la direction d'accélération, dans lequel après un trajet de déplacement défini, la vitesse du piston (8) diminue, avec la masse d'impact se détachant alors du piston (8).

2. Dispositif actionneur selon la revendication 1, dans lequel l'élément de liaison prend la forme d'un boulon de retenue (16).

3. Dispositif actionneur selon la revendication 1 ou 2, dans lequel l'élément de liaison (16) inclut une charge explosive (44).

4. Dispositif actionneur selon la revendication 3, dans lequel la charge explosive (44) est agencée et configurée de sorte que l'élément de liaison (16) soit actionné lors du déclenchement de la charge explosive (44) de manière à couper la liaison entre le second actionneur (20) et le piston (8).

5. Dispositif actionneur selon l'une quelconque des revendications précédentes, dans lequel le premier actionneur (2) prend la forme d'un cylindre et inclut un logement de cylindre (6) dans lequel le piston (8) est guidé de manière mobile, dans lequel le piston (8) sépare une première chambre de cylindre (22) d'une seconde chambre de cylindre (24).

6. Dispositif actionneur selon la revendication 5, dans lequel dans la première chambre de cylindre (22) un élément ressort (26) est agencé qui forme le moyen de sollicitation et qui repose sur le logement de cylindre (6) et applique la force de sollicitation sur le piston (8) et/ou
dans lequel dans la première chambre de cylindre (22) un fluide est fourni qui est appliqué sur le piston (8) dans la direction d'expansion de la première chambre de cylindre (22), avec le fluide formant le moyen de sollicitation.

7. Dispositif actionneur selon l'une quelconque des revendications précédentes, dans lequel le premier actionneur (2) est supporté pour être déplaçable axialement dans une structure de retenue (4).

8. Dispositif actionneur selon la revendication 7, dans lequel un dispositif amortisseur (36) est fourni grâce auquel le premier actionneur (2) repose sur la structure de retenue (4), et/ou dans lequel une butée (34) est fournie via laquelle un trajet de déplacement du premier actionneur (2) est limité dans la direction d'accélération opposée de la masse d'impact (14).

9. Dispositif actionneur selon l'une quelconque des revendications précédentes, dans lequel le second actionneur (20) prend la forme d'un cylindre hydraulique.

10. Agencement comprenant une pluralité de dispositifs actionneurs selon l'une quelconque des revendications précédentes.

11. Agencement selon la revendication 10, dans lequel les dispositifs actionneurs (1) sont adaptés pour être déclenchés d'une manière synchronisée.

12. Procédé comprenant un dispositif actionneur selon l'une quelconque des revendications 1 à 9 ou comprenant un agencement selon la revendication 10 ou 11, comprenant les étapes consistant à :
- tendre le premier actionneur (2),
- relâcher la liaison entre le premier actionneur (2) et le second actionneur (20) pour faire accélérer la masse d'impact (14).
